# EUROPÄISCHE PATENTANMELDUNG

(11) **EP 1 693 652 A2**
(43) Veröffentlichungstag der Anmeldung: **23.08.2006**
(21) Anmeldenummer: 06001081.6
(22) Anmeldetag: 19.01.2006
(51) Int. Cl.: G01F 1/66

(54) **Durchflussmesser**

(30) Priorität: 17.02.2005 DE 102005007241
(71) Anmelder: Hydrometer GmbH, 91522 Ansbach (DE)
(72) Erfinder: Kroemer, Harald, 91522 Ansbach (DE); Öfelein, Wilhelm, 91522 Ansbach (DE); Hauenstein, Günter, 63477 Maintal 3 (DE)
(74) Vertreter: Stippl, Hubert

(57) **Zusammenfassung**

Die Erfindung betrifft einen Durchflussmesser für flüssige oder gasförmige Medien mit einem vom Medium durchströmten Messkanal (1), mindestens einem Einlass- und mindestens einen Auslasskanal sowie mindestens einem Ultraschallwandlerpaar (2, 3) zum Aussenden bzw. Empfangen von Ultraschallsignalen, wobei zur Leitung eines Ultraschallsignals von einem Ultraschallwandler (2 bzw. 3) zum anderen Ultraschallwandler (3 bzw. 2) mindestens ein Reflektorpaar (4, 5) im Messkanal (1) angeordnet ist, der Durchmesser des Messkanals (1) bereichsweise zur Strömungsführung des Mediums durch eine Reduzierung verringert ist, wobei die Reduzierung (7) durch einen an der Messkanalinnenwand (6) angeordneten bzw. integrierten Messkanaleinsatz gebildet wird, der gleichzeitig als Halterung oder Fixierung für weitere Funktionsteile dient. Außerdem betrifft die Erfindung einen Durchflussmesser, bei dem eine Strömungsleitplatte als Halteplatte für das Reflektorpaar dient und sich in Längsrichtung des Messkanals erstreckt. Bei einer weiteren Ausführungsvariante sind mindestens zwei Messstrecken mit jeweils mindestens einem Reflektorpaar und jeweils einem Ultraschallwandlerpaar vorgesehen.

## Beschreibung

Die Erfindung betrifft einen Durchflussmesser für flüssige oder gasförmige Medien.

Für die Ultraschalldurchflussmessung sind Durchflussmesser mit einem von Medium durchströmten Messkanal sowie einem Einlass- und einem Auslasskanal bekannt, wobei mindestens ein Ultraschallwandlerpaar zum Aussenden bzw. Empfangen von Ultraschallsignalen vorgesehen ist. Wie aus DE 100 47 383 C1 hervorgeht, ist zur Leitung eines Ultraschallsignals von einem Ultraschallwandler zum anderen Ultraschallwandler ein Reflektorpaar im Messkanal angeordnet, so dass eine U-förmige Umlenkung der Ultraschallsignale erfolgt. Innerhalb der Messstrecke bzw. im Eingangsbereich können unsymmetrische oder radial gestörte Strömungsprofile auftreten, die zu einer Verfälschung des Messergebnisses führen.

Es ist auch bekannt, den Durchmesser bzw. Querschnitt des Messkanals zumindest bereichsweise zur Störmungsführung des Mediums zu reduzieren, um eine ausreichend große Strömungsgeschwindigkeit im Messbereich zu erhalten, um eventuelle unsymmetrische Strömungsprofile weitgehend zu eliminieren.

Es ist die Aufgabe der vorliegenden Erfindung, einen gattungsgemäßen Durchflussmesser derart weiterzubilden, dass die Messgenauigkeit erhöht wird.

Diese Aufgabe wird durch die gesamte Lehre der Patentansprüche 1, 25 und 42 gelöst. Vorteilhafte Weiterbildungen der Erfindung ergeben sich aus den Unteransprüchen.

Erfindungsgemäß ist eine Reduzierung vorgesehen, die durch einen an der Messkanalinnenwand angeordneten bzw. intrigierten Messkanaleinsatz gebildet wird, der gleichzeitig als Halterung oder Fixierung für weitere Funktionsteile dient. Dies hat den Vorteil bzw. die Doppelfunktion, dass der Messkanal einerseits reduziert ist und das Medium entsprechend durch den Messkanal geleitet wird, was wiederum für eine entsprechend hohe Messgenauigkeit sorgt. Andererseits dient die Reduzierung als Halterung oder Fixierung für weitere Funktionsteile, so dass andere Halterungsmittel oder dergleichen entfallen können. Ferner kann das Gehäuse des Messkanals und der Messkanaleinsatz aus unterschiedlichen Materialien bestehen. Insbesondere kann das Gehäuse selbst aus Messing, Rot- oder beschichtetem Grauguss, Aluminium, Edelstahl oder aus Kunststoff bestehen, während der Messkanaleinsatz vorteilhafterweise aus Kunststoff hergestellt ist.

Mit Vorteil kann dabei der Durchmesser des Messkanals im Bereich der Messstrecke, insbesondere zwischen dem zusammengehörigen Reflektorpaar reduziert sein. Mit den beiden Ultraschallwandlern sowie den beiden Reflektoren kann ein Ultraschallpfad nach dem U-Strahl-Prinzip gebildet werden, d. h. die Messzone für die Strömungsgeschwindigkeit liegt zwischen den beiden Reflektoren. Die Elektronik eines angeschlossenen Rechenwerkes detektiert die unterschiedlichen Laufzeiten der Schallwellen in und gegen die Strömungsrichtung in der Messstrecke nach dem bekannten Laufzeitdifferenzverfahren. Die starke Strömungseinschnürung durch die Reduzierung sorgt für eine ausreichend große Strömungsgeschwindigkeit zwischen den beiden Reflektoren und eliminiert weitgehend unsymmetrische Strömungsprofile im Eingangsbereich des Messgerätes. Ein ausgeprägter Messeffekt wird erhalten und der Einfluss radial gestörter Strömungsprofile minimiert.

Als Reduzierung kann ein Messkanalring vorgesehen sein, der entweder in dem Messkanal integriert ist oder in einfacherweise in den Messkanal eingesetzt werden kann. Der Messkanalring kann so ausgestaltet sein, dass er den Messkanal gleichmäßig um seinen Umfang reduziert und das Medium direkt durch das Zentrum des Messkanals geleitet wird.

Die Reduzierung kann aus mehreren, insbesondere aus zwei Reduzierungsteilen, z. B. aus zwei Meßkanalringteilen, bestehen. Derartige Reduzierungsteile haben den Vorteil, dass sie gewisse Toleranzen erlauben und in entsprechender Weise an der Messkanalinnenwand anliegen. Zwei Reduzierungsteile haben außerdem den Vorteil, dass sie zwischen sich z. B. ein Strömungsblech aufnehmen können, welches für eine weitere Optimierung der Strömung des Mediums sorgt.

Die zwei Reduzierungsteile einer Reduzierung bzw. eines Messkanalrings können zweckmäßigerweise identisch sein, so dass für deren Herstellung z. B. nur eine Spritzgussform erforderlich ist. Außerdem wird dadurch die Montage der Reduzierung bzw. des Messkanalrings wesentlich erleichtert.

Die Reduzierungsteile können vorteilhafterweise lösbar verbindbar, z. B. zusammensteckbar oder verschraubbar sein und z. B. mit dem vorgenannten Strömungsleitblech zusammen als eine Einheit in den Messkanal eingeführt werden. Für Reparaturmaßnahmen können die Messkanalringteile auch wieder in einfacher Weise voneinander gelöst werden.

Die Reduzierungsteile können aber auch dauerhaft miteinander verbunden, z. B. verklebt sein.

Mit Vorteil kann von der Reduzierung eine Halteplatte fixiert werden. Bei dieser Halteplatte kann es sich vorteilhafterweise um die oben beschriebene Strömungsleitplatte handeln.

Ferner kann die Halteplatte zur Anordnung des mindestens einen Reflektorpaars vorgesehen sein.

Die Halteplatte nimmt damit zwei Aufgaben wahr, nämlich zum einen die Optimierung des Strömungsprofils, indem Drallanteile in der Strömung, insbesondere im Einlaufbereich des Messkanals, reduziert werden, und zum anderen die Trägerfunktion für das Reflektorpaar.

Zweckmäßigerweise kann sich die Halteplatte in Längsrichtung des Messkanals erstrecken, wobei sie diametral im Messkanal angeordnet ist. Die Reduzierung zusammen mit der Halteplatte sorgt insbesondere bei größeren Durchflussmessern mit Nennweiten von größer als 50 mm für eine Beschleunigung der Strömungsgeschwindigkeit sowie für eine Eliminierung von störenden Strömungsprofilen.

Die Reduzierung kann mit der Halteplatte zu einer Einheit verbunden sein, so dass diese Einheit als Messeinsatz von vorne bzw. von einer Seite in den Messkanal eingeschoben werden kann. Reduzierung und Halteplatte zusammen bilden sozusagen eine Einheit zur Strömungsoptierung.

Ein oben beschriebener Reduzierungsteil kann insbesondere stirnseitig mindestens einen Zapfen aufweisen, der in eine korrespondierende Bohrung in der Halteplatte und/oder in dem anderen Reduzierungsteil eingreift. Dadurch ist eine stabile, einfach montierbare und wieder lösbare Verbindung geschaffen.

Zwischen Reduzierung und Messkanalinnenwand kann eine Abdichtung vorgesehen sein, welche Toleranzen ausgleicht. Die Abdichtung kann außerdem die gesamte Einheit, also die Reduzierung und die daran angeordnete Halteplatte umschließen, so dass die stabile Einheit zusätzlich gesichert und zur Messkanalinnenwand abgedichtet ist.

Als Abdichtung können mindestens ein, insbesondere zwei um die Reduzierung umlaufende O-Ringe vorgesehen sein. Zwei O-Ringe erhöhen die Abdichtung und optimieren die Zentrierung des gesamten Messeinsatzes im Gehäuse. Die Reduzierung bzw. der Messkanalring kann umlaufende Nuten aufweisen, in denen die O-Ringe einliegen, damit diese in ihrer Lage stabilisiert sind. Die O-Ringe gleichen außerdem unterschiedliche Temperaturkoeffizienten zwischen Metall- und Kunststoffteilen aus.

Die Reduzierung kann mindestens eine im Wesentlichen in Strömungsrichtung verlaufende Nut oder einen Kanal im Bereich der Ultraschallwandler aufweisen. Diese Nuten erzeugen eine stetige Strömung über die daran angrenzenden Wandleroberflächen, wodurch sich Ablagerungen nahezu ausschließen lassen. Da die Reduzierung auch Stau- und Wirbelzonen in ihrem vorder- und rückseitigem Bereich verursacht, die ggf. zu Ablagerungen auf den Wandleroberflächen führen können, sind diese Nuten von wesentlichem Vorteil.

Die Nut oder der Reinigungskanal zur Vermeidung von Verschmutzung bzw. örtlich stabilen Luftblasen kann an der Innenseite der Reduzierung angeordnet sein, womit die abdichtenden O-Ringe über den gesamten Außenumfang der Reduzierung angebracht werden können.

Die Nut kann aber auch an der Außenseite der Reduzierung bzw. des Messkanalrings angeordnet sein, wo sie auch zur Vermeidung von Verschmutzung bzw. örtlich stabilen Luftblasen in der Totzone der Reduzierung unterhalb der Wandler dient.

Der mindestens eine O-Ring kann bei der zuletzt genannten Ausführungsvariante in Nuten einliegen, die bis vor die gehäuseseitige Reinigungsnut reichen. Die Nuten für die O-Ringe können dabei als Ringnuten ausgebildet sein, in welcher ein einziger O-Ring eingelegt werden kann.

Mit besonderem Vorteil können Reduzierung und Reflektoren bzw. Halteplatte bzw. Reflektorhalter so zueinander angeordnet bzw. ausgestaltet sein, dass die laminare Strömung des Mediums kaum beeinflusst wird. Damit können Abschattungseffekte, also Strömmungsinhomogenitäten in der Messzone und eine zu sehr kleinen Durchflüssen hin stark abfallende Geräte-Kennlinie zuverlässig verhindert werden. Durch die vorteilhafte konstruktive Variante kann der Messbereich z. B. zu sehr kleinen Strömungsgeschwindigkeiten hin ausgedehnt werden, oder alternativ, bei identischen messtechnischen Eigenschaften durch Vergrößerung des Reduzierungsinnendurchmessers der Druckabfall des Durchflusszählers verringert werden.

Als eine Ausführungsvariante kann z. B. eine axial geneigte Messstrecke vorgesehen sein, wobei der einlaufseitige Reflektor zur in Längsrichtung verlaufenden Achse (Längsachse) des Messkanals geringer geneigt ist als der auslaufseitige Reflektor. Insbesondere kann der einlaufseitige Reflektor in einem Bereich zwischen 35° und 44° zur in Längsrichtung verlaufende Achse (Längsachse) des Messkanals geneigt sein, wobei der auslaufseitige Reflektor in einem Bereich zwischen 46° und 70° zur Längsachse geneigt ist. Die Reduzierung selbst muss dabei nicht verändert werden. Die Messstrecke verläuft dadurch axial geneigt zur Längsachse des Messkanals. Durch einen auf ca. 40 % zur Achse reduzierten Anstellwinkel des einlaufseitigen Reflektors und ohne eine vorhergehende Auslenkung der Strömung nach oben durch die Reflektorbefestigung folgt die Strömung weitgehend der Rundung über die Reflektorfläche hinweg. Auch der ausgangsseitige Reflektor wird frei umströmt, so dass sich der gewünschte Selbstreinigungseffekt optimal entfalten kann.

Bei einer weiteren Ausführungsvariante kann auch eine nicht-zentrische Reduzierung vorgesehen sein, deren offener Innenbereich außerzentrisch im Messkanal positioniert ist. Bei der nicht-zentrischen Reduzierung weist eine Seite der Reduzierung eine größere Dicke auf, die zur gegenüberliegenden Seite kontinuierlich abnimmt. Durch eine entsprechende Anordnung der Reflektoren wird auch die laminare Strömung deutlich effektiver in die Ultraschallmessstrecke umgelenkt.

Die Messstrecke verläuft bei der letzten Ausführungsvariante zweckmäßigerweise im Wesentlichen zentrisch im offenen Innenbereich der Reduzierung.

Die Reflektoren und/oder Reflektorhalter können in einfacher Weise aus der Halteplatte zumindest bereichsweise ausgestanzt und entsprechend gebogen sein. Bei Bedarf können die Reflektoren von der Ebene der Halteplatte oder von der Ebene der Reflektorhalter nur in Richtung Zentrum des offenen Innenbereichs der Reduzierung geneigt sein, so dass keine vorhergehende Auslenkung der Strömung in eine andere Richtung erfolgt und dadurch gegebenenfalls Strömungsinhomogenitäten entstehen können.

Ferner kann eine asymmetrische Reduzierung vorgesehen sein, deren gegenüberliegende Randbereiche (bzw. Anströmbereiche) in ihrer Neigung sich jeweils kontinuierlich zueinander entgegengesetzt ändern. Die Dicke der Reduzierung bleibt dabei stets gleich. Der Vorteil dieser Ausführungsvariante ist, dass zwei identische Reduzierungshalbschalen bzw. Messkanalringteile verwendet werden können.

Bei einer weiteren Ausführungsvariante kann ein schräge Reduzierung vorgesehen sein, deren Wandstärke sich über die Breite der Reduzierung kontinuierlich ändert und im Querschnitt der Reduzierung auf einer Seite zu- und auf der gegenüberliegenden Seite abnimmt. Hierbei kann eine leichte Auslenkung der Halteplatte nach oben im Bereich der Reflektoren vorgesehen sein, um eine effektive Strömungsführung zu bewirken. Auch in diesem Fall können wieder zwei identische Reduzierungshalbschalen eingesetzt werden.

Alternativ zur oben beschriebenen Vorrichtung mit zwei Reduzierungsteilen kann die Reduzierung einteilig ausgebildet sein und die Halteplatte zweiteilig. In diesem Fall können die beiden Halteplattenteile seitlich z. B. in eine entsprechende Nut des Messkanalrings eingesteckt werden.

Die Reduzierung bzw. der Meßkanalring kann aus Kunststoff bestehen und damit als Massenprodukt in kostengünstiger Weise im Spritzgießverfahren hergestellt werden.

Erfindungsgemäß wird weiterhin vorgeschlagen, dass in dem Messkanal mindestens eine Strömungsleitplatte vorgesehen ist, die als Halteplatte für das Reflektorpaar dient und sich in Längsrichtung des Messkanals erstreckt. Diese Ausführungsvariante ist oben im Zusammenhang mit der Reduzierung bereits beschrieben worden. Die Halteplatte in der Funktion eines Leitbleches minimiert den Einfluß störender Drallkomponenten in der Wasserströmung, wie sie vor allem hinter sogenannten Raumkrümmern massiv auftreten.

Die Länge der Halteplatte entspricht im Wesentlichen der Länge des Messkanals, damit bereits im Einlauf- und Auslaufkanal eine entsprechende Strömungslenkung erzeugt wird.

Die Halteplatte kann zumindest bereichsweise und zumindest an einem Endbereich randseitig in Nuten an der Messkanalinnenwand für einen stabilen Halt, insbesondere bei strömendem Medium, eingreifen. Dazu kann die Halteplatte in ihren stirnseitigen Endbereichen breiter sein, so dass diese Verbreiterung als Plattenhalter dient und in die jeweiligen Nuten in der Gehäuseinnenwand insbesondere im Flanschbereich eingreifen können.

Die Halteplatte kann aber auch mittels insbesondere an ihren Eckbereichen angeordneten Haltemitteln mit der Messkanalinnenwand verbunden sein. Die Halteplatte selbst muss damit in ihren Endbereichen nicht verbreitert ausgeführt sein. Die Haltemittel können außerdem aus einem solchen Material bestehen, dass sie schädliche Schwingungen abdämpfen.

Die Haltemittel können als Haltestifte ausgebildet sein, die längsseitig an dem jeweiligen Randbereich der Halteplatte angeordnet sind. Die Haltestifte können aus Kunststoff bestehen. Sie dienen der Stabilisierung der Halteplatte und vermeiden - wie oben bereits erläutert - schädliche Schwingungen. Außerdem vermeiden sie einen direkten Kontakt zwischen dem Gehäuse (meist aus Messing) und der Halteplatte (z. B. aus Edelstahl) zur Vermeidung von Kontaktkorrosion. Mittels der Haltemittel oder Haltestifte kann der Abstand vom Gehäuse zur Halteplatte zusätzlich auf einige Millimeter vergrößert werden.

Die Halteplatte erstreckt sich zweckmäßigerweise diametral durch den Messkanal, so dass oberhalb und unterhalb der Halteplatte dieselben Strömungsverhältnisse vorliegen. Die Halteplatte kann mit einer im Messkanal angeordneten Reduzierung bzw. einem Messkanalring verbunden sein, so dass sie mit diesem eine Einheit bildet, wie dies oben beschrieben wurde.

Die Halteplatte kann Reflektorhalter für die Reflektoren aufweisen, so dass die Reflektoren in stabiler Weise angeordnet werden können.

Die Reflektorhalter können vorteilhafterweise strömungsoptimiert geformt sein, um einerseits den Druckabfall in diesem Bereich niedrig zu halten und andererseits die Strömung gezielt in die Ultraschallmeßzone zu leiten mit dem Nebeneffekt, dass die Selbstreinigung der Reflektoren begünstigt wird.

Zusätzlich können die Oberflächen der Ultraschallwandler und/oder der Reflektoren und/oder der Reflektorenhalter antihaftbeschichtet sein. Derartige Anithaftbeschichtungen zeichnen sich durch eine niedrige Oberflächenenergie aus. Bewährt haben sich sogenannte diamantartige amorphe Kohlenstoffschichten, die durch chemische Gasphasenabscheidung aufgebracht werden und im Unterschied zu dem bekannten SolGel - Verfahren absolut und dauerhaft beständig gegenüber wässrigen Lösungen sind.

Die Reflektorhalter können mit der Halteplatte lösbar verbunden sein, so dass diese im Schadensfall schnell austauschbar sind. Die Reflektorhalter können zweiteilig sein, wobei ein erstes Reflektorhalterteil Zapfen aufweist, die Bohrungen der Halteplatte durchgreifen und in korrespondierenden Bohrungen eines auf der anderen Seite der Halteplatte positionierten zweiten Reflektorhalters eingreifen. Vor Zusammenfügen der beiden Reflektorhalterteile wird der Reflektor stirnseitig auf einem Reflektorhalterteil eingelegt und durch Zusammenfügen der beiden Teile darin gesichert. Die Reflektorhalter können an ihren stirnseitigen, aneinander zugewandten Flächen abgeschrägt sein, so dass die Reflektoren entsprechend schräg einliegen, damit die gewünschte U-StrahlFührung ermöglicht wird.

Die Reflektoren können jeweils in einer Aufnahme des Reflektorhalters angeordnet sein. Die Tiefe der Aufnahme kann vorteilhafterweise der Dicke der Reflektoren entsprechen, so dass die Stirnseite der Reflektorhalter und die Oberfläche der Reflektoren bündig abschließt und eine Wirbelzone verhindert wird.

Zusätzlich oder alternativ dazu können die Reflektoren abdeckt sein, indem sie z. B. von einem Wandbereich des Reflektorhalters überdeckt sind. Durch die Verwendung eines geeigneten Materials, insbesondere eines Kunststoffmaterials, für die Abdeckung bzw. den Wandbereich des Reflektorhalters bzw. den gesamten Reflektorhalter, dessen schallrelevante Kenndaten (Impedanz) sich höchstens gering von denen des Wassers unterscheiden (z. B. PEEK, PES, PVDF, EPDM, Viton, jeweils ohne oder einem sehr geringen Glasfaseranteil), werden die Reflexionseigenschaften im Vergleich zum offenen Reflektor nicht negativ beeinflusst. Die Positionierung der Reflektoren ist in diesem Fall einfach durchzuführen, da diese nur in entsprechende Vertiefungen der Reflektorhalter eingelegt werden müssen. Eine zusätzliche Befestigung der Reflektoren ist nicht erforderlich.

In einer alternativen Ausführungvariante können die Reflektoren und/oder die Reflektorhalter Bestandteile der Halteplatte sein, wobei sie z. B. aus der Halteplatte zumindest bereichsweise ausgestanzt und hochgebogen sind. Diese Variante ist äußerst einfach und besonders kostengünstig. Reflektorhalter sind eigentlich nicht mehr notwendig, da die ausgestanzten Bereiche der Halteplatte selbst als Reflektoren dienen.

Die Reflektoren können oval geformt und um 45 ° verdreht sein, damit sie den Ultraschall in Form des U-Strahl-Prinzips von Ultraschallwandler zu Ultraschallwandler weiterleiten können. Die Reflektorhalter oder Reflektoren können über Stege mit der Halteplatte verbunden sein, welche so stabil sind, dass sie die Reflektoren in der gebogenen Position dauerhaft halten.

In einer weiteren erfindungsgemäßen Ausführungsvariante sind mindestens zwei Messstrecken mit jeweils mindestens einem Reflektorpaar und jeweils einem Ultraschallwandler vorgesehen. Damit kann in verschiedenen Bereichen des Messkanals gemessen werden, wodurch eine höhere Messgenauigkeit erreicht wird. Bei sehr großen Nennweiten z. B. über 50 mm des Messkanals ist die Integration von mehreren Messstrecken von Vorteil, um eine hohe Meßgenauigkeit zu erreichen. Insbesondere bei Nennweiten größer als 100 mm wird damit eine besonders gute, weitgehend von Strömungsprofil unabhängige Meßgenauigkeit erzielt. Vorteilhafterweise können die Kontakte der Wandlerpaare alle gemeinsam parallel (ohne zusätzliche elektronische Beschaltung) am Rechenwerk angeschlossen werden. Statt der sonst üblichen mathematischen Mittelwertbildung durch die Rechenwerksoftware wird die Tatsache ausgenutzt, dass sich phasenverschobene Druckschwingungen auf der Wandleroberfläche physikalisch addieren. Es erfolgt eine Mittelwertbildung unmittelbar aus der Messung. Die beiden Reflektoren eines Reflektorpaares können eine Messstrecke festlegen, so dass die eigentliche Messung nur zwischen den beiden Reflektoren stattfindet. Die Ultraschallwandler dienen dabei lediglich dem Aussenden bzw. Empfangen von Ultraschallsignalen.

Der Ultraschall kann wie bei den obigen Ausführungsvarianten U-förmig von einem Ultraschallwandler über die Reflektoren zum anderen Ultraschallwandler geführt werden. Die Reflektoren und damit die Messstrecke lassen sich so optimal im strömenden Medium plazieren.

Die Vorteile der Zwei- oder Mehrkanaltechnik bestehen außerdem darin, dass die physikalische Mittelwertbildung eine weitgehende Eliminierung des sekundärströmungsinduzierten Fehlers, welcher durch temperaturbedingte Konvektionsströmungen auftritt, bewirkt. Sowohl bei sehr kleinen Durchflüssen als auch bei hohen Mediumstemperaturen wird eine gute und reproduzierbare Messgenauigkeit erreicht, die weitgehend unabhängig ist von der Einbaulage des Messgerätes.

Die verschiedenen Messstrecken können zumindest bereichsweise von einer Halteplatte, auf der die Reflektoren angeordnet sind, voneinander getrennt sein. Bei der Halteplatte kann es sich vorteilhafterweise um die bei den anderen Ausführungsformen beschriebene Halteplatte handeln.

Die Halteplatte kann demnach gleichzeitig als Reflektorträger dienen. Dabei kann die Halteplatte mit den Reflektoren bzw. Reflektorhaltern spiegelsymmetrisch ausgebildet sein, so dass auf beiden Seiten der Halteplatte dieselben Bedingungen für die Durchflussmessung vorliegen.

Zweckmäßigerweise kann auf jeder Seite der Halteplatte mindestens ein zusammenwirkendes Reflektorpaar bzw. Reflektorhalterpaar angeordnet sein. Dazu können beispielsweise an der Halteplatte direkt gegenüberliegend zwei Hauptträger positioniert sein, die jeweils vier direkt gegenüberliegende Reflektorhalter tragen. Eine effektive Durchschallung des Messkanals ist damit möglich.

Die Halteplatte kann in einem Bereich zwischen den Reflektoren eines Paares offen sein, so dass die Reflektoren bzw. Reflektorhalter einfach montierbar sind.

In der Mitte des Messkanals kann auch ein Verdrängungskörper angeordnet sein, der wie der an der Messkanalinnenwand angeordnete Messkanalring die Strömung direkt in den Ultraschallmesspfand zwingt. Die Strömung innerhalb der Ultraschallmessstrecken läßt sich so gezielt homogenisieren, wodurch Meßgenauigkeit und Strömungsinvarianz positiv beeinflusst werden können.

Mit Vorteil kann auch bei der Ausführungsvariante mit mehreren Messstrecken die oben beschriebene Reduzierung bzw. der Messkanalring vorgesehen sein, der zu der oben bereits geschilderten Strömungsoptimierung führt.

Die Erfindung ist anhand von Ausführungsbeispielen in den Zeichnungsfiguren näher erläutert. Diese zeigen:
- Fig. 1: eine perspektivische, geschnittene Darstellung eines erfmdungsgemäßen Durchflussmessers mit Messeinsatz umfassend Messkanalring, Halteplatte und Reflektoren;
- Fig. 2 - Fig. 4: perspektivische, zumindest teilweise geschnittene Darstellungen von alternativen Messeinsätzen;
- Fig. 5: Querschnitt eines Messkanalbereichs mit axial geneigter Messstrecke;
- Fig. 6: Querschnitt eines Messkanalbereichs mit einer nicht-zentrischen Reduzierung;
- Fig. 7: Querschnitt eines Messkanalbereichs mit asymmetrischer Reduzierung;
- Fig. 8: perspektivische, zumindest teilweise geschnittene Darstellung eines Messeinsatzes mit asymmetrischer Reduzierung;
- Fig. 9: Querschnitt eines Messkanalbereichs mit schräger Reduzierung;
- Fig. 10: perspektivische, zumindest teilweise geschnittene Darstellung des Messeinsatzes gemäß Fig. 9;
- Fig. 11: perspektivische, zumindest teilweise geschnittene Darstellung eines Messeinsatzes mit zwei Messstrecken;
- Fig. 12: Querschnittdarstellung eines Messkanals mit zwei Messstrecken;
- Fig. 13: Querschnittdarstellung des Messkanals gemäß Fig. 13 um 90° gedreht;
- Fig. 14 und 15: perspektivische, zumindest teilweise geschnittene Darstellungen von Messeinsätzen mit vier Messstrecken;
- Fig. 16: Prinzipschaubild zur physikalischen Addition sowie
- Fig. 17: Messkurven von zwei Messkanälen und deren Addition.

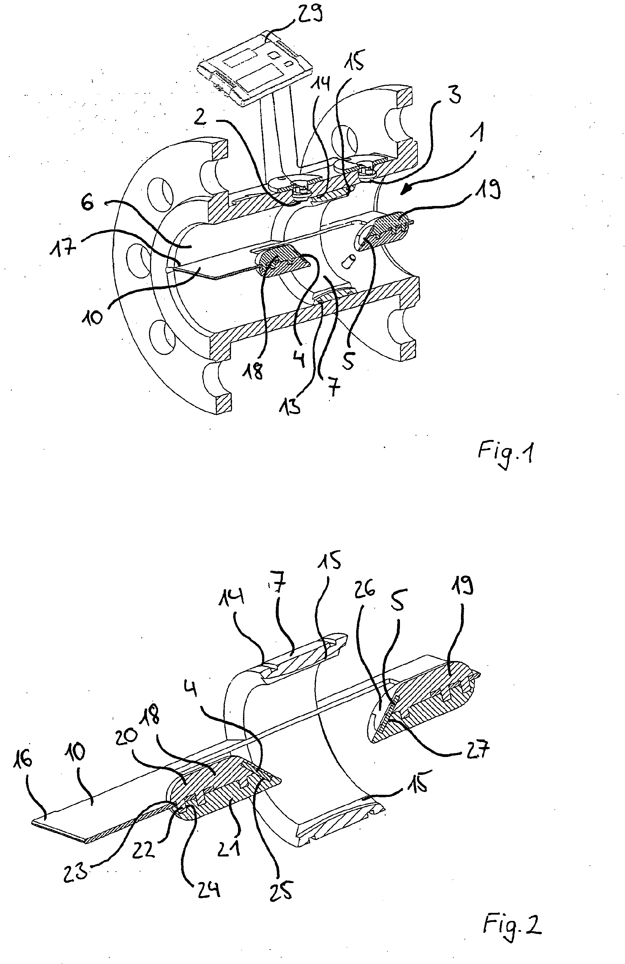

Figur 1 zeigt einen Durchflussmesser für flüssige oder gasförmige Medien mit einem vom Medium durchströmten Messkanal 1, einem Einlass- sowie einem Auslasskanal und einen Ultraschallwandlerpaar 2, 3 zum Aussenden bzw. Empfangen von Ultraschallsignalen, wobei zur Leitung eines Ultraschallsignals von einem Ultraschallwandler 2 zum anderen Ultraschallwandler 3 ein Reflektorpaar 4, 5 im Messkanal 1 vorgesehen ist. Der Durchmesser des Messkanals 1 ist bereichsweise, nämlich im Bereich der Messstrecke, die durch die beiden Reflektoren 4, 5 festgelegt wird, zur Strömungsführung des Mediums reduziert. Die Reduzierung 7 wird durch einen an der Messkanalinnenwand 6 angeordneten Messkanaleinsatz gebildet, der gleichzeitig als Halterung oder Fixierung für weitere Funktionsteile dient. Als Reduzierung 7 ist ein Messkanalring vorgesehen.

Die Reduzierung 7 sorgt für eine Einpressung der einströmenden Flüssigkeit und damit für eine Beschleunigung der Strömung zwischen den beiden Reflektoren 4, 5, wo die Messzone für die Strömungsgeschwindigkeitsmessung liegt. Damit werden auch weitgehend unsymmetrische Strömungsprofile eliminiert, so dass eine genauere Messung durchführbar ist. Indem der Messkanaleinsatz gleichzeitig als Halterung oder Fixierung für weitere Funktionsteile dient, können Produktionskosten reduziert werden.

Wie insbesondere aus den Zeichnungsfiguren 3, 4, 8, 10, 11, 14 und 15 hervorgeht, besteht der Messkanalring 7 aus zwei Messkanalringteilen 8, 9, welche zwischen sich eine Halteplatte 10 einschließen. Der Messkanalring 7 zusammen mit der Halteplatte 10 bildet einen Messeinsatz, der als eine Einheit von vorne in den Messkanal 1 einschiebbar ist.

Die Messkanalringteile 8, 9 sind identisch ausgebildet, was sowohl für deren Herstellung als auch die Montage vorteilhaft ist.

Die Messkanalringteile 8, 9 sind zusammensteckbar und auf diese Weise einfach montierbar und zu Reparaturmaßnahmen demontierbar.

Die im Messkanal 1 angeordnete Halteplatte 10 dient u. a. als Halter für das Reflektorpaar 4, 5. Die Halteplatte 10 ist also gleichzeitig Träger der Messkanalringteile 8, 9 sowie der Reflektoren 4, 5.

Die Halteplatte 10 erstreckt sich in Längsrichtung des Messkanals 1 und stellt damit gleichzeitig mit ihrer Fläche ein Strömungsleitblech dar.

Ein Messkanalringteil 8 weist stirnseitig jeweils einen Zapfen 11 auf, der in eine korrespondierende Bohrung 12 in der Halteplatte 10 sowie in dem anderen Messkanalringteil 9 eingreift. Damit ist eine stabile Einheit hergestellt.

Ferner ist zwischen dem Messkanalring 7 und der Messkanalinnenwand 6 eine Abdichtung in Form von zwei umlaufenden O-Ringen 13 vorgesehen. Neben der Abdichtfunktion zentrieren die O-Ringe 13 den gesamten Meßeinsatz im Gehäuse und gleichen unterschiedliche Temperaturkoeffizienten zwischen Metallgehäuse und Messkanalring 7 aus Kunststoff aus.

Der Messkanalring 7 weist umlaufende Nuten 14 auf, in denen die O-Ringe 13 sicher einliegen.

Zum Schutz der Ultraschallwandler 2, 3 vor Ablagerungen in den Stau- und Wirbelzonen weist der Messkanalring 7 eine in Strömungsrichtung verlaufende Nut 15 auf, die eine stetige Strömung über die Wandleroberflächen erzeugt.

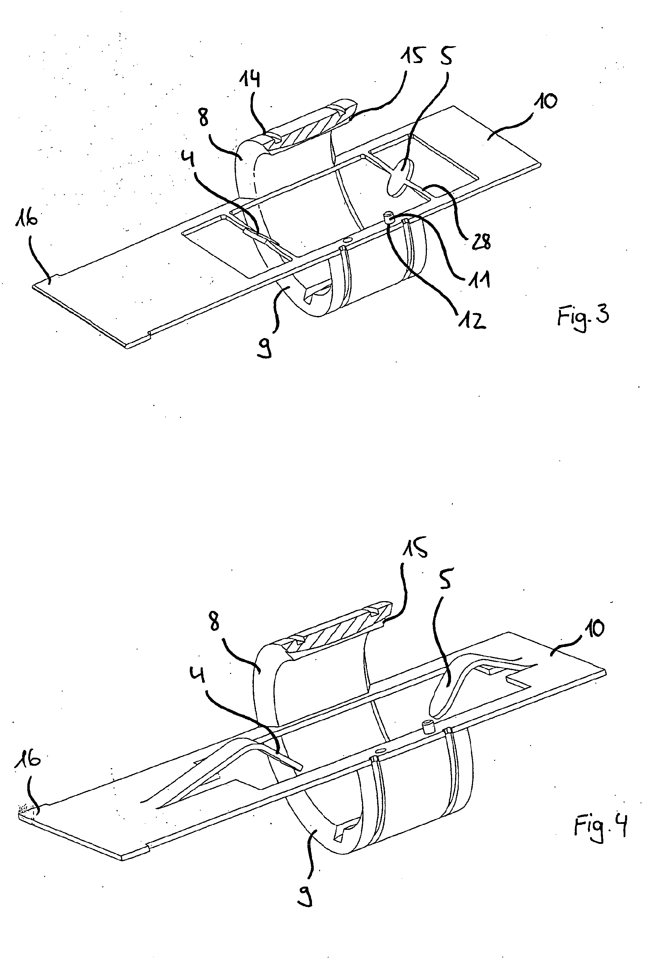

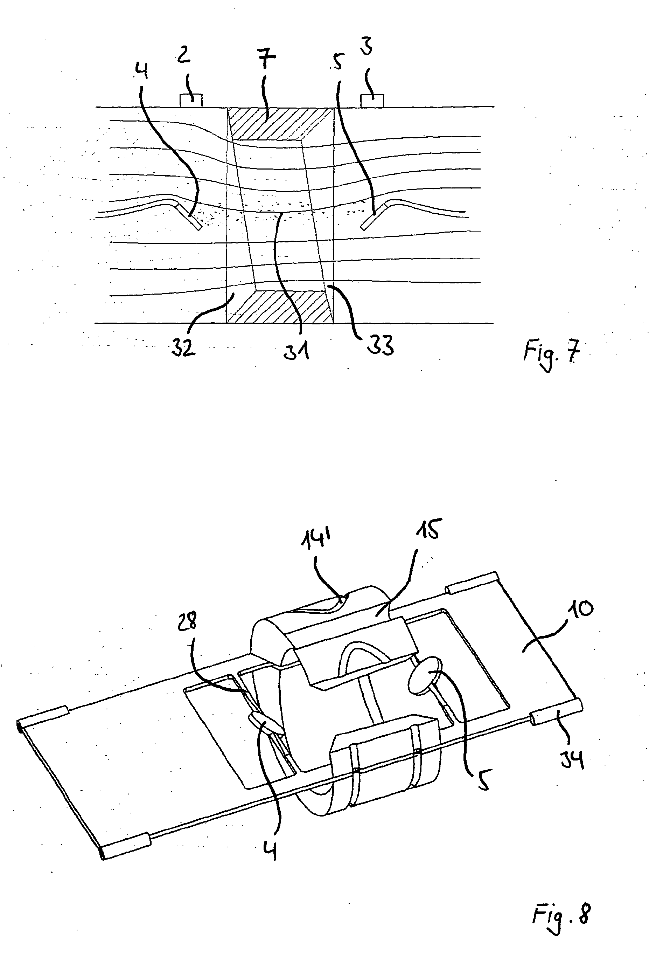

Bei den Ausführungsformen gemäß der Figuren 3, 4 und 11 ist die Nut 15 an der Messkanalinnenwand 6 angeordnet. Die Nut 15 kann aber auch an der Außenseite der Reduzierung angeordnet sein, wie dies in Figur 8 dargestellt ist. Dort schützt die Nut 15 auch vor Verschmutzung bzw. örtlich stabilen Luftblasen in der Totzone der Reduzierung unterhalb der Ultraschallwandler 2, 3. Der in dieser Ausführungsform angeordnete O-Ring 13 liegt in Nuten 14 ein, die bis vor die Nut 15 reichen. Die Nuten 14 ist dabei als Ringnut 14 ausgebildet, welche nur bis vor die Nut 15 von beiden Seiten verläuft.

Bei der in Figur 4 gezeigten Variante ragen die Reflektoren 4, 5 wie lang gestreckte Metallzungen in den Ausschnitt der Halteplatte 10. Durch die exakte Biegung in die dargestellte Form wird sowohl die für das U-Strahl-Prinzip nötige Schallführung als auch die gewünschte, anliegende Strömungsführung über den eingangsseitigen Reflektor erreicht, da speziell im Fall der laminaren Strömung diese an der Blechkuppe nicht abreist und somit die negativen Auswirkungen der Wirbelbildung an dieser Position vermieden werden.

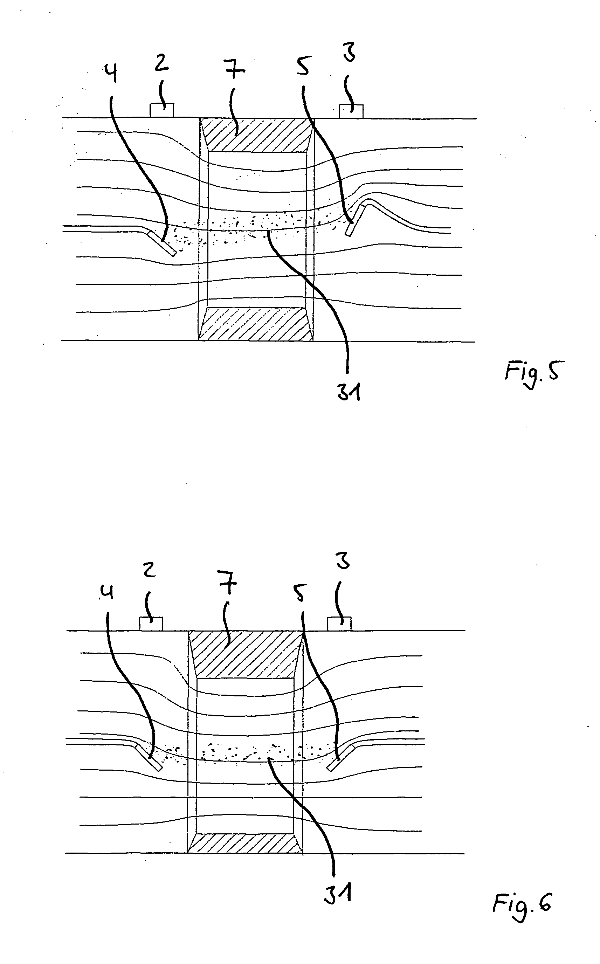

Vor allem in den Figuren 5 bis 10 sind die Reduzierung und die Reflektoren 4, 5 bzw. die Halteplatte 10 so zueinander angeordnet bzw. ausgestaltet, dass die laminare Strömung des Mediums kaum beeinflusst wird.

In Figur 5 ist die Messstrecke 31, die durch einen punktierten Bereich wiedergegeben ist, axial zur Längsachse des Messkanals 1 geneigt. Der einlaufseitige Reflektor 4 ist um ca. 40° zur Längsachse des Messkanals 1 geneigt, wobei der auslaufseitige Reflektor 5 um ca. 65° zur Längsachse geneigt ist. Dadurch folgt die Strömung weitgehend der Rundung über die Reflektorfläche hinweg und eventuelle Strömungsinhomogenitäten werden verhindert. Die dadurch weitgehend bleibende laminare Strömung sorgt außerdem dafür, dass die Reflektoren 4, 5 ständig gereinigt werden.

In Figur 6 eine nicht-zentrische Reduzierung vorgesehen, deren offener Innenbereich außerzentrisch im Messkanal 1 positioniert ist. Die Reflektoren 4, 5 bzw. die Bereiche, an denen die Reflektoren 4, 5 angeordnet sind, sind nach unten geneigt, so dass auch hier die laminare Strömung erhalten bleibt. Die Reflektoren 4, 5 sind dabei so angeordnet, dass die Messstrecke 31 im Wesentlichen zentrisch im offenen Innenbereich der Reduzierung verläuft.

Die Reflektoren 4, 5 und/oder Reflektorhalter 18, 19 können aus der Halteplatte 10 zumindest bereichsweise ausgestanzt und gebogen sein, so dass keine gesonderten Reflektoren oder Reflektorhalter eingesetzt werden müssen.

Die Reflektoren 4, 5 sind von der Ebene der Halteplatte 10 oder von der Ebene der Reflektorhalter 18, 19 nur in Richtung Zentrum des offenen Innenbereichs der Reduzierung geneigt, so dass Strömungsunregelmäßigkeiten vermieden werden.

In den Figuren 7 und 8 ist eine asymmetrische Reduzierung vorgesehen, deren gegenüberliegende Randbereiche 32, 33 (bzw. Anströmbereiche) in ihrer Neigung (und damit auch in ihrer Breite) sich jeweils kontinuierlich zueinander entgegengesetzt verändern. Die Dicke des Messkanalrings 7 bleibt über den gesamten Umfang gleich. Auch diese Anordnung der Reflektoren 4, 5 sowie die spezielle Ausgestaltung des Messkanalrings 7 sorgen für eine weitgehende Beibehaltung der laminaren Strömung. Der Vorteil dieser Ausführungsvariante besteht außerdem darin, dass zwei identische Messkanalringteile 8 verwendet werden können.

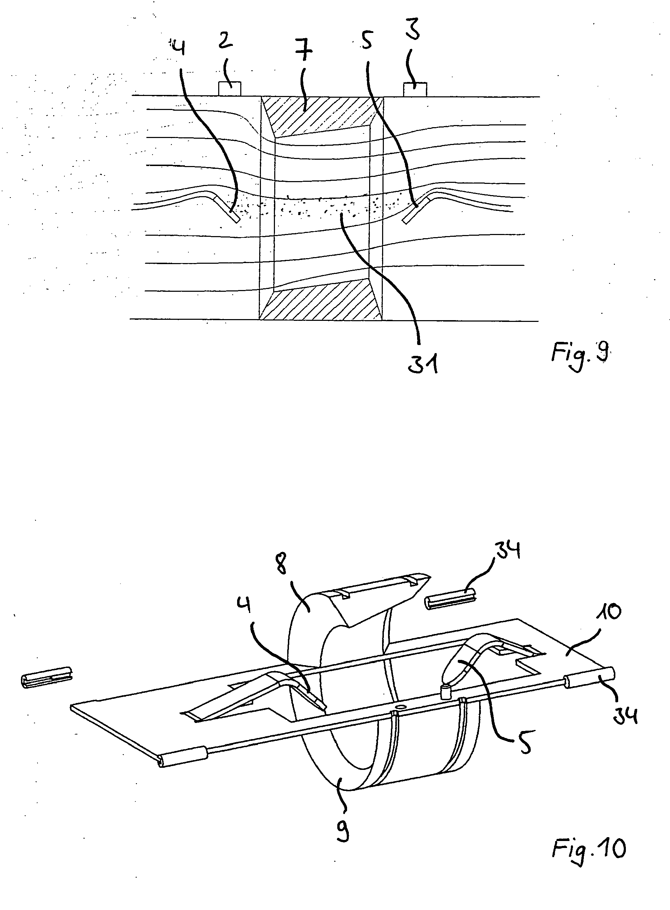

Bei dem Ausführungsbeispiel gemäß der Figuren 9 und 10 ist eine schräge Reduzierung vorgesehen, deren Wandstärke sich über die Breite der Reduzierung kontinuierlich ändert, wobei die Wandstärke im Querschnitt der Reduzierung auf einer Seite zu- und auf der gegenüberliegenden Seite entsprechend abnimmt. Wie auch in Figur 9 zeichnerisch dargestellt ist, wird hier auch die laminare Strömung des Mediums beibehalten.

Es besteht auch die Möglichkeit, dass der Messkanalring 7 einteilig und dabei z. B. die Halteplatte 10 zweiteilig ist, so dass die beiden Teilen der Halteplatte 10 an den Messkanalring 7 z. B. eingesteckt werden können. Diese Ausführungsvariante ist jedoch in den Zeichnungsfiguren nicht dargestellt.

Die Reduzierung bzw. der Messkanalring 7 bestehen aus Kunststoff und können damit in großen Stückzahlen relativ günstig im Spritzgießverfahren hergestellt werden.

Wie oben bereits erwähnt, dient die Halteplatte 10 gleichzeitig als Strömungsleitplatte und als Träger für das Reflektorpaar 4, 5 und erstreckt sich in Längsrichtung des Messkanals 1. Die Halteplatte 10 reduziert insbesondere Drallanteile speziell im Einlaufbereich des Messkanals 1.

Um eine entsprechende Strömungsleitung in gesamten Messkanal 1 zu erzeugen, entspricht die Länge der Halteplatte 10 im Wesentlichen der Länge des Messkanals 1.

Die Halteplatte 10 ist in einem Endbereich verbreitert in Form von Haltebereichen 16 ausgeführt. Die Haltebereiche 16 greifen in Nuten 17 der Messkanalinnenwand 6 ein, womit die Halteplatte 10 in axialer und radialer Richtung zentriert wird.

Die Halteplatte 10 kann aber auch mittels an ihren Eckbereichen angeordneten Haltemitteln, die in den Figuren 8 und 10 als Haltestifte 34 ausgebildet sind, mit der Messkanalinnenwand 6 verbunden sein. Die Haltestifte 34 sind dabei längsseitig an den jeweiligen Randbereich der Halteplatte 10 angeordnet. Die Haltestifte 34 können dabei noch in entsprechenden Nuten 17 an der Messkanalinnenwand 6 einliegen. Die Haltestifte 34 stabilisieren die Halteplatte 10 und vermeiden schädliche Schwingungen der Halteplatte 10. Außerdem verhindern die Haltestifte 34 einen direkten Kontakt des Gehäuses des Messkanals, das meist aus Messing besteht, und der Halteplatte 10, die meist aus Edelstahl besteht, und vermeidet somit eine Kontaktkorrosion.

Die Halteplatte 10 erstreckt sich diametral durch den Messkanal 1, so dass die Strömungsführung über die gesamte Breite des Messkanals 1 herbeigeführt wird und die störenden Strömungsanteile entsprechend verdrängt werden.

Wie oben bereits erwähnt, ist die Halteplatte 10 mit einem im Messkanal 1 angeordneten Messkanalring 7 verbunden und bildet damit einen Meßeinsatz zur Strömungsleitung.

Die Halteplatte 10 weist in den Ausführungsvarianten gemäß den Figuren 1, 2 und 5 bis 7 Reflektorhalter 18, 19 für die Reflektoren 4, 5 auf. Die Reflektorhalter 18, 19 haben den Vorteil, dass diese strömungsoptimiert geformt werden können. Dabei sind die Außenflächen der Reflektorhalter 18, 19 entsprechend abgerundet (siehe Figuren 1, 2 und 5 bis 7). Die strömungsoptimierte Form der Reflektorhalter 18, 19 hält einerseits den Druckabfall in diesen Bereichen niedrig und leitet andererseits die Strömung gezielt in die Ultraschallmeßzone mit dem Nebeneffekt, dass die Selbstreinigung der Reflektoren 4, 5 begünstigt wird.

Zusätzlich oder alternativ dazu können die Oberflächen der Ultraschallwandler 2, 3 und/oder der Reflektoren 4, 5 und/oder der Reflektorhalter 18, 19 anithaftbeschichtet sein.

Die Reflektorhalter 18, 19 sind mit der Halteplatte 10 lösbar verbindbar, was für Montage- und für Demontagezwecke vorteilhaft ist.

In den Ausführungsvarianten gemäß Figuren 1 und 2 sind die Reflektorhalter 18, 19 jeweils zweiteilig, wobei ein erstes Reflektorhalterteil 20 Zapfen 22 aufweist, die Bohrungen 23 der Halteplatte 10 durchgreifen und in korrespondierende Bohrungen 24 des auf der anderen Seite der Halteplatte 10 positionierten zweiten Reflektorhalterteils 21 eingreifen. Vorher werden die Reflektoren 4, 5 in die entsprechenden Aufnahmen 25, 27 der Reflektorhalter 18, 19 eingelegt und mittels der Verbindung der Reflektorhalterteile 20, 21 darin befestigt.

Bei der Ausführungsvariante gemäß Figur 2 sind die Reflektoren 4, 5 von einem Wandbereich 26 des jeweiligen Reflektorhalters 18 bzw. 19 abgedeckt. Die Reflektorhalter 18, 19 bestehen aus einem geeigneten Kunststoffmaterial, dessen schallrelevante Kenndaten ähnlich denen des Wassers sind, so dass die Reflexionseigenschaften der damit abgedeckten Reflektoren 4, 5 nicht negativ beeinträchtigt werden. Auf diese Weise lässt sich der konstruktive Aufwand stark reduzieren, da die Reflektoren 4, 5 lediglich in die entsprechenden Aufnahmen 27 eingelegt werden müssen, ohne dass es einer zusätzlichen Befestigung bedarf.

Bei den Ausführungsformen der Meßeinsätze gemäß den Figuren 3, 4, 8 und 10 sind die Reflektoren 4, 5 Teile der Halteplatte 10 und aus dieser ausgestanzt und nach oben bzw. unten gebogen. Die Reflektoren 4, 5 sind in manchen Fällen über Stege 28 mit der Halteplatte 10 verbunden. Diese Auführungsvarianten sind besonders preiswert.

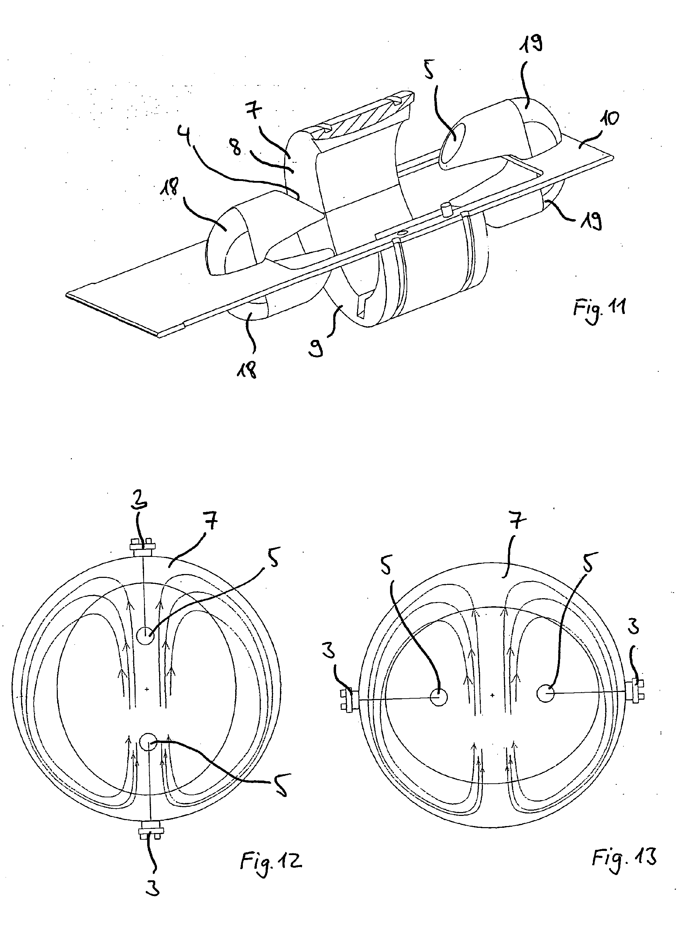

Im Folgenden wird auf die Figuren 11 bis 15 Bezug genommen. Bei den dortigen Messeinsätzen sind mindestens zwei Messstrecken mit jeweils einem Reflektorpaar 4, 5 und jeweils einem Ultraschallwandlerpaar 2 ,3 vorgesehen. Die beiden Reflektoren 4, 5 eines Reflektorpaares legen eine Messstrecke fest. Diese Mehrzahl von Messstrecken ist dann zweckmäßig, wenn der Messkanal 1 eine große Nennweite aufweist (insbesondere größer 100 mm), da bei großen Meßkanälen 1 die Strömungsgeschwindigkeit nicht überall gleich ist. Die Kontakte der Ultraschallwandlerpaare werden alle gemeinsam parallel am Rechenwerk 29 angeschlossen, wobei sich phasenverschobene Druckschwingungen auf der Wandleroberfläche physikalisch addieren.

Mit dieser Anordnung wird sozusagen ein großer Wandler in zwei oder mehrere Teile aufgeteilt und die nun getrennte mechanische - und somit auch elektrische Verbindung - wird dadurch kompensiert, dass die geteilten Wandler elektrisch parallel geschalten werden. Für die kontaktierte elektronische Verstärkerschaltung ist es dann völlig unerheblich, ob ein großer Wandler oder zwei mehrere geteilte Wandler angeschlossen werden. Die relevanten elektrischen Kenndaten (Impedanz, ohmscher Widerstand, Kapazität und Induktivität) ändern sich nicht, so lange einige konstruktive Besonderheiten berücksichtigt werden.

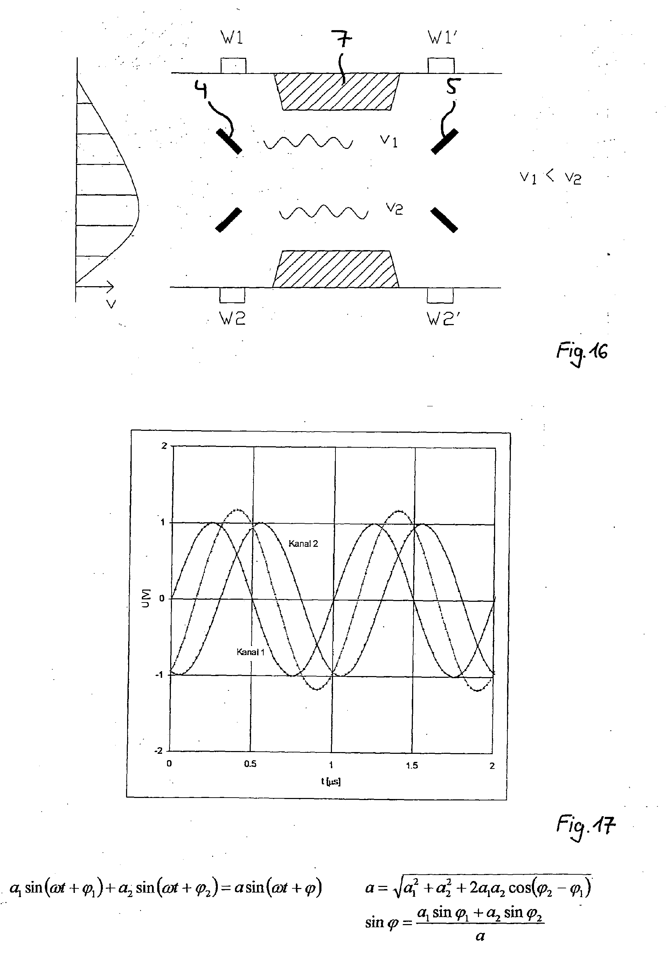

Zur näheren Erläuterung der physikalischen Addition wird auf die Figuren 16 und 17 verwiesen. Die unterschiedlichen Strömungsgeschwindigkeiten v1 und v2 in den Messkanälen 1 erzeugen Laufzeitdifferenzen in den Messstrecken, d. h. die Periode des Messkanals 1 erreicht den Empfängerwandler W1' später als die gleiche des Messkanals 2. Die mechanische Anregung des Ultraschallwandlers ergibt sich aus der Summe dieser beiden Kurven, so dass als elektrisches Wandlersignal die exakte ermittelte Phasenverschiebung der Auswerteelektronik zur Verfügung steht. Unterscheiden sich die beiden Signalamplituden a1 und a2 (siehe Gleichungen zu Figur 17), muss mit einer kleinen Differenz zum exakten Mittelwert gerechnet werden.

Der Ultraschall wird bei jedem einzelnen Messkanal U-förmig von einem Ultraschallwandler 2 über die Reflektoren 4, 5 zum anderen Ultraschallwandler 3 geführt, so dass in jeder Messstrecke dieselben Bedingungen vorliegen.

Weitere Vorteile der Zwei- oder Mehrkanal- bzw. Messstrecken-Technik gehen aus den Figuren 12 und 13 hervor. Durch Abkühlung des Mediums im gehäusenahen Raum entstehen bei großvolumigen Durchflussmessern Konvektionsströmungen. Je größer die Temperaturdifferenz zwischen Medium und der umgebenden Raumluft ist, desto ausgeprägter sind die- auch entlang der Ultraschallmessrichtung - auftretenden Strömungen. Die Strömungen sind in den Figuren 12 und 13 mit Pfeilen gekennzeichnet. Als Folge der gegenläufigen Messrichtung oben bzw. unten im Messkanal 1 bewirkt die physikalische Mittelwertbildung eine weitgehende Eliminierung des sekundärströmungsinduzierten Fehlers, also des Fehlers, der durch die Konvetionströmung erzeugt wird. Dies gilt sowohl bei der Durchflussmessung unter laminaren Strömungsbedingungen als auch bei Durchfluss Null. Wird der Zwei-Kanal-Durchflussmesser um 90° gedreht in die Rohrleitung geführt (Fig. 13), ist trotz Konvektion nicht mit Fehlmessungen zu rechnen, da Strömungssektor und Ultraschallmessrichtung zueinander senkrecht stehen. Auch bei sehr kleinen Durchflüssen und hohen Mediumstemperaturen wird eine gute und reproduzierbare Messgenauigkeit, weitgehend unabhängig von der Einbaulage des Messgerätes, erreicht.

Der Querschnitt des Messkanals in den Figuren 12 und 13 ist durch die Reduzierung 7 oval, was für die zwei Messstrecken von Vorteil ist.

Auf der Halteplatte 10 können eine Mehrzahl von Reflektoren 4, 5 angeordnet werden. Die Halteplatte 10 kann dabei den oben beschriebenen Halteplatten 10 entsprechen und ebenfalls zur Strömungsführung zusammen mit der Reduzierung beitragen.

Die Halteplatte 10 ist zusammen mit den Reflektorhaltern 18, 19 spiegelsymmetrisch ausgebildet, so dass im oberen und unteren Bereich des Messkanals 1 dieselben Bedingungen für eine exakte Messung vorliegen. Dabei ist auf jeder Seite der Halteplatte 10 mindestens ein Reflektorhalterpaar 18, 19 angeordnet. Figur 5 zeigt eine Variante eines Meßeinsatzes mit zwei parallel angeordneten Ultraschallmesspfaden. Die hier nicht gezeigten, oben und unten angeordneten Wandlerpaare bilden zusammen mit den Reflektoren 4, 5 zwei voneinander völlig unabhängige Ultraschallmessstrecken. Durch die Parallelschaltung der eingangsseitigen Ultraschallwandler 2 bzw. der ausgangsseitigen Ultraschallwandler 3 erreicht man eine physikalische Mittelwertbildung, ohne die Rechenwerksbeschaltung im Vergleich zu den Einkanaltypen abändern zu müssen.

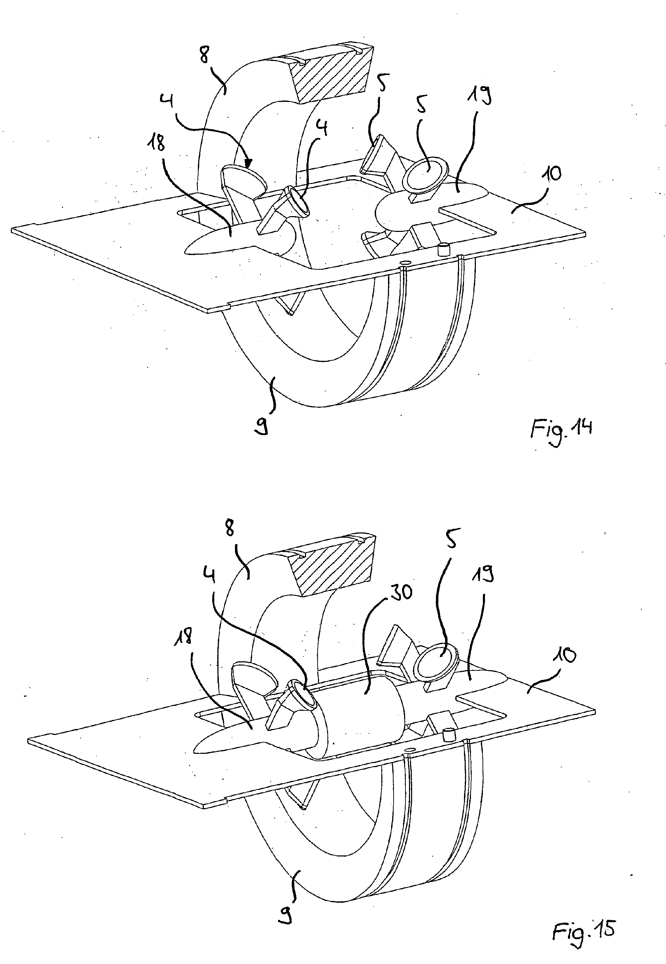

Die in den Figuren 14 und 15 dargestellte Version ist insbesondere für Nennweiten größer 200 mm geeignet. Diese Anordnungen können auch für kleinere Nennweiten genutzt werden, falls eine besonders hohe Meßganuigkeit besonders bei stark asymmetrischen Strömungsprofilen gewünscht wird. Die Varianten zeigen vier Ultraschallmesspfade. Es werden insgesamt acht Ultraschallwandler 2, 3 und acht Reflektoren 4, 5 eingesetzt. Die Geometrie des Messkanalrings ist auch hier kreisförmig, kann aber auch z. B. die Kontur eines vierblättrigen Kleeblattes mit den Ultraschallwandlern 2, 3 in den Blattzentren aufweisen.

Der Unterschied zwischen den Varianten der Figuren 14 und 15 besteht darin, dass die Halteplatte 10 in Figur 14 in einem Bereich zwischen den Reflektoren 4, 5 eines Paares offen ist. In Figur 15 ist in der Mitte des Messkanals 1 ein Verdrängungskörper 30 angeordnet, der für eine konsequentere Stromführung im Rohrzentrum sorgt. Die Strömung innerhalb der Ultraschallmessstrecken lässt sich so gezielt homogenisieren, wodurch Meßgenauigkeit und Strömungsinvarianz positiv beeinflusst werden können.

### BEZUGSZEICHENLISTE

- 1.: Messkanal
- 2.: Ultraschallwandler
- 3.: Ultraschallwandler
- 4.: Reflektor
- 5.: Reflektor
- 6.: Messkanalinnenwand
- 7.: Reduzierung, Messkanalring
- 8.: Reduzierungsteil, Messkanalringteil
- 9.: Reduzierungsteil, Messkanalringteil
- 10.: Halteplatte
- 11.: Zapfen
- 12.: Bohrung
- 13.: O-Ring
- 14.: Nut
- 14'.: Ringnut
- 15.: Nut
- 16.: Haltebereich
- 17.: Nut
- 18.: Reflektorhalter
- 19.: Reflektorhalter
- 20.: Erstes Reflektorhalterteil
- 21.: Zweites Reflektorhalterteil
- 22.: Zapfen
- 23.: Bohrung
- 24.: Bohrung
- 25.: Aufnahme
- 26.: Wandbereich
- 27.: Aufnahme
- 28.: Steg
- 29.: Rechenwerk
- 30.: Verdrängungskörper
- 31.: Messstrecke
- 32.: Randbereich
- 33.: Randbereich
- 34.: Haltestifte

## Patentansprüche

1. Durchflussmesser für flüssige oder gasförmige Medien mit einem vom Medium durchströmten Messkanal (1), mindestens einem Einlass- und mindestens einem Auslasskanal sowie mindestens einem Ultraschallwandlerpaar (2, 3) zum Aussenden bzw. Empfangen von Ultraschallsignalen, wobei zur Leitung eines Ultraschallsignals von einem Ultraschallwandler (2 bzw. 3) zum anderen Ultraschallwandler (3 bzw. 2) mindestens ein Reflektorpaar (4, 5) im Messkanal (1) angeordnet ist, der Durchmesser des Messkanals (1) bereichsweise zur Strömungsführung des Mediums durch eine Reduzierung (7) verringert ist,
**dadurch gekennzeichnet, dass**
die Reduzierung (7) durch einen an der Messkanalinnenwand (6) angeordneten bzw. integrierten Messkanaleinsatz gebildet wird, der gleichzeitig als Halterung oder Fixierung für weitere Funktionsteile dient.

2. Durchflussmesser nach Anspruch 1,
**dadurch gekennzeichnet, dass**
als Reduzierung ein Messkanalring vorgesehen ist.

3. Durchflussmesser nach einem der Ansprüche 1 oder 2,
**dadurch gekennzeichnet, dass**
die Reduzierung (7) aus mehreren, insbesondere aus zwei Reduzierungsteilen (8, 9) besteht.

4. Durchflussmesser nach Anspruch 3,
**dadurch gekennzeichnet, dass**
die zwei Reduzierungsteile (8, 9) einer Reduzierung (7) identisch sind.

5. Durchflussmesser nach einem der Ansprüche 3 oder 4,
**dadurch gekennzeichnet, dass**
die Reduzierungsteile (8, 9) lösbar verbindbar, insbesondere zusammensteckbar, oder verschraubbar sind.

6. Durchflussmesser nach einem der vorhergehenden Ansprüche,
**dadurch gekennzeichnet, dass**
von der Reduzierung (7) einer Halteplatte (10) fixiert wird.

7. Durchflussmesser nach Anspruch 6,
**dadurch gekennzeichnet, dass**
die Halteplatte (10) zur Anordnung des mindestens einen Reflektorpaars (4, 5) vorgesehen ist.

8. Durchflussmesser nach einem der vorhergehenden Ansprüche,
**dadurch gekennzeichnet, dass**
ein Reduzierungsteil (8) insbesondere stirnseitig mindestens einen Zapfen (11) aufweist, der in eine korrespondierende Bohrung (12) in der Halteplatte (10) und/oder in dem anderen Reduzierungsteil (9) eingreift.

9. Durchflussmesser nach einem der vorhergehenden Ansprüche,
**dadurch gekennzeichnet, dass**
zwischen Reduzierung (7) und Messkanalinnenwand (6) eine Abdichtung vorgesehen ist.

10. Durchflussmesser nach Anspruch 9,
**dadurch gekennzeichnet, dass**
als Abdichtung mindestens ein, insbesondere zwei um die Reduzierung (7) umlaufende O-Ringe (13) vorgesehen sind.

11. Durchflussmesser nach Anspruch 10,
**dadurch gekennzeichnet, dass**
die Reduzierung (7) umlaufende Nuten (14) aufweist, in denen die O-Ringe (13) einliegen.

12. Durchflussmesser nach einem der vorhergehenden Ansprüche,
**dadurch gekennzeichnet, dass**
die Reduzierung (7) mindestens eine im Wesentlichen in Strömungsrichtung verlaufende Nut (15) im Bereich der Ultraschallwandler (2, 3) aufweist.

13. Durchflussmesser nach einem der vorhergehenden Ansprüche,
**dadurch gekennzeichnet, dass**
die Nut (15) an der Außenseite des Messkanalrings (9) angeordnet ist.

14. Durchflussmesser nach Anspruch 13,
**dadurch gekennzeichnet, dass**
der mindestens eine O-Ring (13) in Nuten (14) einliegt, die bis vor die Nut (15) reichen.

15. Durchflussmesser nach einem der Ansprüche 13 oder 14,
**dadurch gekennzeichnet, dass**
die Nuten (14) als Ring-Nuten (14') ausgebildet sind.

16. Durchflussmesser nach einem der vorhergehenden Ansprüche,
**dadurch gekennzeichnet, dass**
Reduzierung (7) und Reflektoren (4, 5) bzw. Halteplatte (10) bzw. Reflektorhalter (18, 19) so zueinander angeordnet bzw. ausgestaltet sind, dass die laminare Strömung des Mediums kaum beeinflusst wird.

17. Durchflussmesser nach einem der vorhergehenden Ansprüche,
**dadurch gekennzeichnet, dass**
der einlaufseitige Reflektor (4) zur in Längsrichtung verlaufenden Achse (Längsachse) des Messkanals (1) geringer geneigt ist als der auslaufseitige Reflektor (5).

18. Durchflussmesser nach einem der vorhergehenden Ansprüche,
**dadurch gekennzeichnet, dass**
eine nicht-zentrische Reduzierung vorgesehen ist, deren offener Innenbereich außerzentrisch im Messkanal (1) positioniert ist.

19. Durchflussmesser nach Anspruch 18,
**dadurch gekennzeichnet, dass**
die Messstrecke (31) im Wesentlichen zentrisch im offenen Innenbereich der Reduzierung verläuft.

20. Durchflussmesser nach einem der vorhergehenden Ansprüche,
**dadurch gekennzeichnet, dass**
die Reflektoren (4, 5) und/oder Reflektorhalter (18, 19) aus der Halteplatte (10) zumindest bereichsweise ausgestanzt und gebogen sind.

21. Durchflussmesser nach einem der vorhergehenden Ansprüche,
**dadurch gekennzeichnet, dass**
die Reflektoren (4,5) von der Ebene der Halteplatte (10) oder von der Ebene der Reflektorhalter (18, 19) in Richtung Zentrum des offenen Innenbereichs der Reduzierung geneigt sind.

22. Durchflussmesser nach einem der vorhergehenden Ansprüche,
**dadurch gekennzeichnet, dass**
eine asymmetrische Reduzierung vorgesehen ist, deren gegenüberliegende Randbereiche (32, 33) in ihrer Neigung sich jeweils kontinuierlich zueinander entgegengesetzt verändern.

23. Durchflussmesser nach einem der vorhergehenden Ansprüche,
**dadurch gekennzeichnet, dass**
eine schräge Reduzierung vorgesehen ist, deren Wandstärke sich über die Breite der Reduzierung kontinuierlich ändert, wobei im Querschnitt der Reduzierung die Wandstärke auf einer Seite zu- und auf der gegenüberliegenden Seite abnimmt.

24. Durchflussmesser nach einem der vorhergehenden Ansprüche,
**dadurch gekennzeichnet, dass**
die Reduzierung (7) einteilig ist.

25. Durchflussmesser für flüssige oder gasförmige Medien mit einem vom Medium durchströmten Messkanal (1), mindestens einem Einlass- und mindestens einem Auslasskanal sowie mindestens einem Ultraschallwandlerpaar (2, 3) zum Aussenden bzw. Empfangen von Ultraschallsignalen, wobei zur Leitung eines Ultraschallsignals von einem Ultraschallwandler (2 bzw. 3) zum anderen Ultraschallwandler (3 bzw. 2) mindestens ein Reflektorpaar (4, 5) im Messkanal angeordnet ist, und außerdem mindestens eine Strömungsleitplatte vorgesehen ist, insbesondere nach einem der vorhergehenden Ansprüche 1 - 24,
**dadurch gekennzeichnet, dass**
die Strömungsleitplatte als Halteplatte (10) für das Reflektorpaar (4, 5) dient und sich in Längsrichtung des Messkanals (1) erstreckt.

26. Durchflussmesser nach einem der vorhergehenden Ansprüche,
**dadurch gekennzeichnet, dass**
die Länge der Halteplatte (10) im Wesentlichen der Länge des Messkanals (1) entspricht.

27. Durchflussmesser nach einem der vorhergehenden Ansprüche,
**dadurch gekennzeichnet, dass**
die Halteplatte (10) zumindest bereichsweise randseitig in Nuten (17) der Messkanalinnenwand (6) eingreift.

28. Durchflussmesser nach einem der vorhergehenden Ansprüche,
**dadurch gekennzeichnet, dass**
die Halteplatte (10) mittels insbesondere an ihren Eckbereichen angeordneten Haltemitteln mit der Messkanalinnenwand (6) verbunden ist.

29. Durchflussmesser nach Anspruch 28,
**dadurch gekennzeichnet, dass**
die Haltemittel als Haltestifte (34) ausgebildet sind, die längsseitig an dem jeweiligen Randbereich der Halteplatte (10) angeordnet sind.

30. Durchflussmesser nach einem der vorhergehenden Ansprüche,
**dadurch gekennzeichnet, dass**
sich die Halteplatte (10) diametral durch den Messkanal (1) erstreckt.

31. Durchflussmesser nach einem der vorhergehenden Ansprüche,
**dadurch gekennzeichnet, dass**
die Halteplatte (10) mit einem im Messkanal (1) angeordneten Messkanalring (7) verbunden ist.

32. Durchflussmesser nach einem der vorhergehenden Ansprüche,
**dadurch gekennzeichnet, dass**
die Halteplatte (10) Reflektorhalter (18, 19) für die Reflektoren (4, 5) aufweist.

33. Durchflussmesser nach einem der vorhergehenden Ansprüche,
**dadurch gekennzeichnet, dass**
die Reflektorhalter (18, 19) strömungsoptimiert geformt sind.

34. Durchflussmesser nach einem der vorhergehenden Ansprüche,
**dadurch gekennzeichnet, dass**
die Oberflächen der Ultraschallwandler (2, 3) und/oder der Reflektoren (4, 5) und/oder der Reflektorhalter (18, 19) anithaftbeschichtet sind.

35. Durchflussmesser nach einem der vorhergehenden Ansprüche,
**dadurch gekennzeichnet, dass**
die Reflektorhalter (18, 19) mit der Halteplatte (10) lösbar verbindbar sind.

36. Durchflussmesser nach einem der vorhergehenden Ansprüche,
**dadurch gekennzeichnet, dass**
ein Reflektorhalter (18, 19) zweiteilig ist, wobei ein erstes Reflektorhalterteil (20) Zapfen (22) aufweist, die Bohrungen (23) der Halteplatte (10) durchgreifen und in korrespondierende Bohrungen (24) eines auf der anderen Seite positionierten zweiten Reflektorhalterteils (21) eingreifen.

37. Durchflussmesser nach einem der vorhergehenden Ansprüche,
**dadurch gekennzeichnet, dass**
die Reflektoren (4, 5) jeweils in einer Aufnahme (25, 27) des Reflektorhalters (18, 19) angeordnet sind.

38. Durchflussmesser nach einem der vorhergehenden Ansprüche,
**dadurch gekennzeichnet, dass**
die Reflektoren (4, 5) insbesondere von einem Wandbereich (26) abgedeckt sind.

39. Durchflussmesser nach einem der vorhergehenden Ansprüche,
durch **gekennzeichnet**, dass
die Reflektoren (4, 5) oder die Reflektorenhalter (18, 19) Bestandteile der Halteplatte (10) sind.

40. Durchflussmesser nach einem der vorhergehenden Ansprüche,
**dadurch gekennzeichnet, dass**
die Reflektoren (4, 5) und/oder Reflektorhalter (18, 19) aus der Halteplatte (10) zumindest bereichsweise ausgestanzt und gebogen sind.

41. Durchflussmesser nach einem der vorhergehenden Ansprüche,
**dadurch gekennzeichnet, dass**
die Reflektorhalter (18, 19) oder Reflektoren (4, 5) über Stege (28) mit der Halteplatte (10) verbunden sind.

42. Durchflussmesser für flüssige oder gasförmige Medien mit einem vom Medium durchströmten Messkanal (1), mindestens einem Einlass- und mindestens einem Auslasskanal sowie mindestens einem Ultraschallwandlerpaar (2, 3) zum Aussenden bzw. Empfangen von Ultraschallsignalen, wobei zur Leitung eines Ultraschallsignals von einem Ultraschallwandler (2 bzw. 3) zum anderen Ultraschallwandler (3 bzw. 2) mindestens ein Reflektorpaar (4, 5) im Messkanal (1) angeordnet ist, insbesondere nach einem der vorhergehenden Ansprüche 1 - 41,
**dadurch gekennzeichnet, dass**
mindestens zwei Messstrecken mit jeweils mindestens einem Reflektorpaar (4, 5) und jeweils einem Ultraschallwandlerpaar (2, 3) vorgesehen ist.

43. Durchflussmesser nach einem der vorhergehenden Ansprüche,
**dadurch gekennzeichnet, dass**
die Ultraschallwandlerpaare (2, 3) parallel geschaltet sind.

44. Durchflussmesser nach einem der vorhergehenden Ansprüche,
**dadurch gekennzeichnet, dass**
der Ultraschall U-förmig von einem Ultraschallwandler (2 bzw. 3) über die Reflektoren (4, 5) eines Reflektorpaares zum anderen Ultraschallwandler (3 bzw. 2) geführt wird.

45. Durchflussmesser nach einem der vorhergehenden Ansprüche,
**dadurch gekennzeichnet, dass**
die Messstrecken zumindest bereichsweise von einer Halteplatte (10), auf der die Reflektoren (4, 5) angeordnet sind, voneinander getrennt sind.

46. Durchflussmesser nach einem der vorhergehenden Ansprüche,
**dadurch gekennzeichnet, dass**
die Halteplatte (10) mit den Reflektoren (4, 5) bzw. Reflektorhaltern (18, 19) spiegelsymmetrisch ausgebildet ist.

47. Durchflussmesser nach einem der vorhergehenden Ansprüche,
**dadurch gekennzeichnet, dass**
auf jeder Seite der Halteplatte (10) mindestens ein Reflektorpaar (4, 5) bzw. Reflektorhalterpaar (18, 19) angeordnet ist.

48. Durchflussmesser nach einem der vorhergehenden Ansprüche,
**dadurch gekennzeichnet, dass**
die Halteplatte (10) in einem Bereich zwischen den Reflektoren (4, 5) eines Paares offen ist.

49. Durchflussmesser nach einem der vorhergehenden Ansprüche,
**dadurch gekennzeichnet, dass**
in der Mitte des Messkanals (1) ein Verdrängungskörper (30) angeordnet ist.
